# EUROPEAN PATENT SPECIFICATION

(11) **EP 1 186 115 B1**
(45) Date of publication and mention of the grant of the patent: **05.12.2007**
(21) Application number: 99930424.9
(22) Date of filing: 18.06.1999
(51) Int. Cl.: H04B 3/54, H04B 3/56

(54) **WIRELESS LOCAL DISTRIBUTION SYSTEM USING STANDARD POWER LINES**
DRAHTLOSES LOKALES VERTEILUNGSSYSTEM UNTER BENUTZUNG VON STANDARDSTROMLEITUNGEN
SYSTEME DE DISTRIBUTION LOCALE SANS FIL DANS LEQUEL DES LIGNES DE TRANSPORT D'ENERGIE STANDARD SONT UTILISEES

(43) Date of publication of application: 13.03.2002
(73) Proprietor: Current Technologies, LLC, Bala Cynwyd PA 19004 (US)
(72) Inventor: KLINE, Paul, Germantown, MD 20876 (US)
(74) Representative: Jackson, Richard Eric
(86) International application number: PCT/US1999/013852
(87) International publication number: WO 2000/079697

(56) References cited:
- EP-A- 0 913 955
- US-A- 5 319 634
- US-A- 5 770 996

## Description

### Background of the Invention

The present invention relates generally to wireless communications. More specifically the invention describes a method and apparatus for using the power lines that exist in a home or business to connect to a fixed wireless terminal for subsequent transmission of telecommunications.

### Background

In many undeveloped areas and undeveloped countries wireless communications offers a sane method of providing communication without the need for major expenditures of funds for outside-plant communications infrastructure (i.e. telephone poles, lines, other facilities). However, even with certain so-called "wireless" systems, some communications wiring is still required within a home or business so that communications equipment can be connected to the fixed wireless terminal. Once communications to the wireless terminal are established, the wireless terminal can communicate in a true wireless fashion to other wireless terminals or to a base station thereby avoiding the more extensive outside-plant communications infrastructure.

While electrical power in various forms has reached many homes throughout the world, parallel communications wiring has not been so extensively installed. Therefore in many third-world countries power wiring may exist within a home or business but communications wiring might not. This poses a significant barrier to many individuals and businesses who must install communications wiring in order to be able to communicate via conventional wired communications equipment or the new wireless terminals.

EP 0913955 A2 discloses a communications apparatus for frequency converting signals from a CT2 telephone for transmission to a network conditioning unit which is coupled to a power line.

In addition to the in-home/in-business communications wiring required, the present topology for fixed wireless terminals requires that a transceiver be installed in each user's location. It is not now possible to have multiple users at different locations take advantage of the communications capability of a single fixed wireless terminal (FWT).

It is therefore the object of the present invention to utilize the power lines that are installed in homes and businesses as a way to interface with fixed wireless terminals to conduct subsequent wireless telecommunications.

It is a further object of the present invention to interface multiple types of telecommunications equipment (e.g. telephone, fax, computer) to the power line in a home or business where power lines are in turn connected to a fixed wireless terminal for subsequent wireless telecommunications.

It is yet another object of the present invention to allow multiple users (i.e. different homes or businesses) having a plurality of telecommunications equipment to interface with a single FWT via power lines for subsequent wireless telecommunications.

It is another object of the present invention to provide an interface for the fixed wireless terminal to the power meter attached to the power wiring in a home or business to communicate power utilization to the power company in a wireless fashion.

The wireless local loop distribution system (the present invention) uses standard power lines in a home or business to communicate with a fixed wireless terminal. In this fashion the telecommunications equipment attached to the power lines can use the FWT to communicate in wireless fashion to other FWT's in a network or to a base station.

In many countries there is little telecommunications infrastructure. Telephone and other data wiring simply does not exist in homes or business. Simultaneously, however, electrical power lines have been installed in many third-world or developing countries. Use of these power lines provides a cost-effective method of rapidly deploying a wireless local loop system which depends upon power lines for communication with an FWT.

In an electric power distribution system, step-down power transformers are used by a company to convert higher voltage of several kilovolts to the 110/120 volts required by the home. While several homes may be connected to each step-down power transformer, the transformer effectively isolates the homes or business connected to it. This is referred to as a transformer cluster. As a result, any communications signals flowing over the power lines are effectively isolated by the local step-down power transformer.

The present invention employs a power line interface device (PLID) which provides all of the interface capability necessary to connect plain old telephone service (POTS) via, for example, an RJ11 plug, RS-232 ports for computer communication and exchange of data via the TCP/IP protocol. Using a single PLID attached to the internal power wiring of a home, a user can connect a telephone, fax, or computer to the PLID which in turn is connected to the internal power wiring of the home. Also attached to the power wiring of the home is a fixed wireless terminal (FWT). The FWT communicates with the telecommunications equipment in a wireless fashion.

Thus the present invention allows the internal power wiring of homes to serve as the means by which telecommunication signals are sent to the FWT for subsequent telecommunications. An alternative topology can also be supported by the present wireless invention whereby multiple homes or businesses are connected to a single FWT with no multiplexing capability. The single FWT can then serve the telecommunication needs of several homes or businesses simultaneously provided that those businesses are all located within the local transformer cluster. This type of topology further reduces the cost of wireless telecommunications since a single FWT can serve the needs of several homes or businesses at the same time. The present invention achieves significant savings in several fashions. First, telecommunications wiring within a home or business is avoided. The present invention simply relies upon the power lines already installed within the home or business. Further, having several homes or businesses using the same FWT results in additional savings since the more expensive FWT's are required for a group of subscribers as opposed to one FWT for each subscriber. These advantages and others will be obvious to those skilled in the art after review of the detailed description of the present invention which follows:

### Brief Description of the Drawings

- Figure 1:: Typical Power/Communications Installation
- Figure 2:: Using Power Wiring for Telecommunications
- Figure 3:: Alternative Topology for Using Power Lines for Telecommunications
- Figure 4:: Another Alternative Topology for Using Power Lines for Wireless Telecommunications
- Figure 5:: Block Diagram Using Power Lines as Telecommunication Distribution System

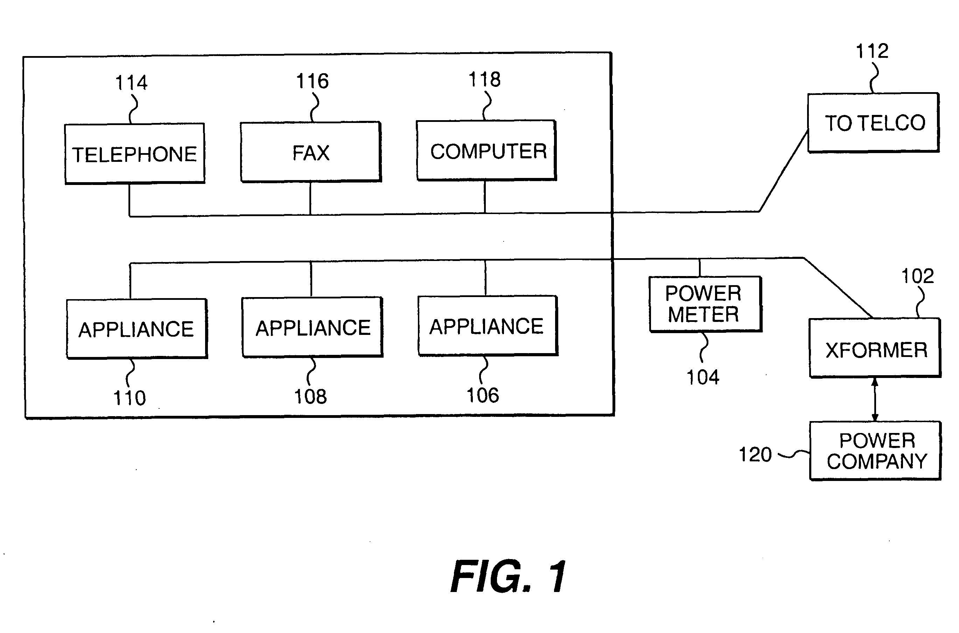

Referring to **Figure 1** a typical power/communication installation in the home or businesses is shown. The power company distributes power over its network to a series of step-down power transformers **102.** A single step-down power transformer **102** can serve the needs of several homes or businesses. In general however the power line from the step-down power transformer **102** passes to an electrical meter **104** at the individual home or business. Thereafter power is distributed over internal power wiring to various appliances **(106,108,110)** which could be electrical equipment of a wide variety of types. Simultaneously the telephone company **112** provides wiring over its network directly to the home to which may be attached the telephones **114,** faxes **116,** computers **118.** Thus it can be seen that two separate systems are required to provide power and telecommunication services to an individual home or business.

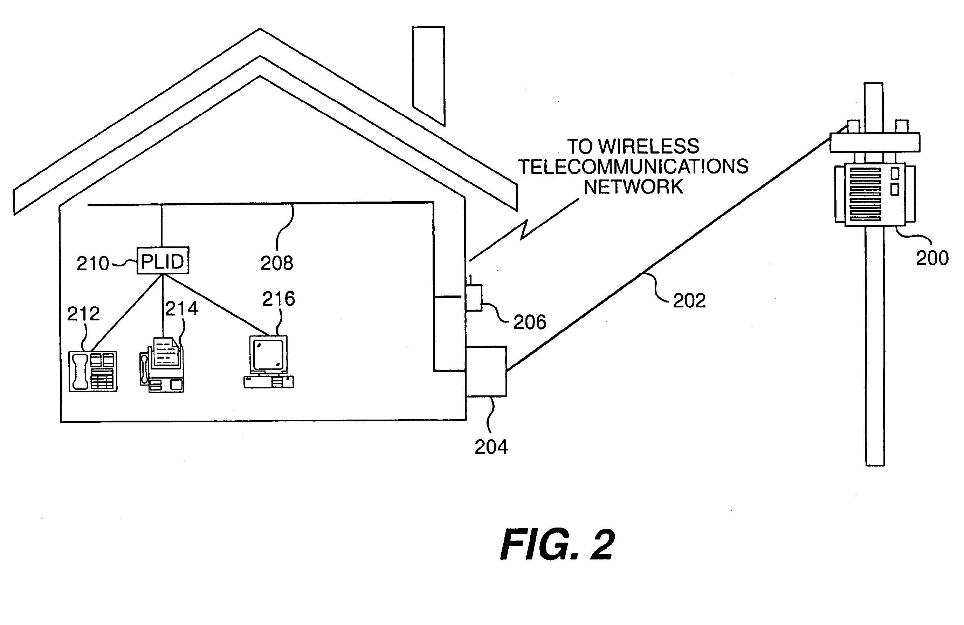

Referring to **Figure 2** an installation is shown using the power wiring for telecommunications. The power company delivers power usually in the several kilovolt range to a step-down power transformer **200.** The transformer steps down the voltage down (e.g. to 110 volts or 120 volts) as required and provides that power over power line **202** to a power meter **204** located at a home or business. Thereafter power is provided internally to the home or business over internal wiring **208.** In the present invention an FWT **206** is connected in parallel to the wiring **208.** The power line interface device (PLID) **210** of the present invention is connected to the internal power wiring **208.** The PLID provides interface means for plain old telephone service (POTS), and data through for example a RS-232 port or Ethernet connection. Thus a user can connect a telephone **212,** a fax **214** and/or a computer **216** to the PLID **210.** A user can have multiple PLID's within any particular installation. This type of installation eliminates the need to wire the subscriber's premises for telecommunications. Currently, the internal wiring of a home or business will typically support data rates of up to 100 kilobits per second with 10⁻⁹ bit error rate (BER), however this may increase in the future.

The power company's step-down power transformer provides isolation which is critical since each device on the power line in the home or business has a unique address and since only a limited number of devices may be connected to the power lines within each cluster within a transformer area.

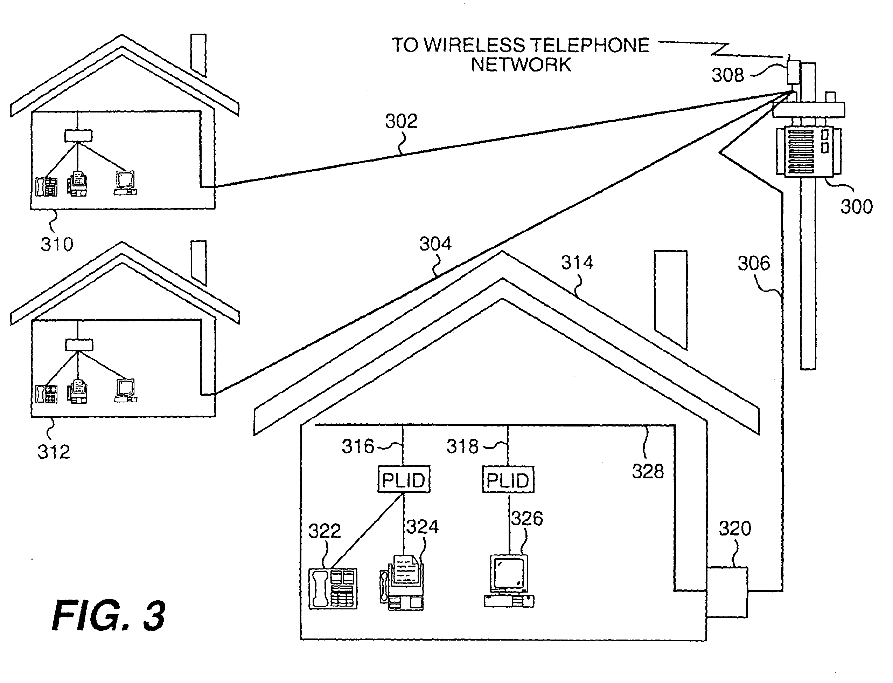

Referring to **Figure 3** a power line telecommunication distribution system for multiple subscribers is shown. Power is provided by the power company to the local step-down power transformer **300.** Thereafter power is sent to individual homes/businesses **310, 312, 314.** An FWT **308** is attached to the external power wires **302, 304, 306** which go to the individual homes/business. The external power wiring is then connected to a typical power meter **320** and proceeds to the internal power wiring of the home or installation **328.** PLID's **316, 318** are attached to the internal power wiring allowing the interface of telephones **322,** fax **324,** and computers **326** to the PLID's. The PLID's are in turn connected to the internal power wiring **328.** Communication is then effected by signals being sent by the telecommunications equipment (telephone, fax and computers, etc.) via the PLID to the internal wiring. However, in this instance the signals from multiple homes/businesses are then routed through the FWT **308** for subsequent transmission. The FWT has the ability to multiplex signals coming from the individual homes/businesses **310, 312, 314.** In this fashion a single FWT can serve the needs of multiple homes/businesses thereby further driving down the cost of telecommunications.

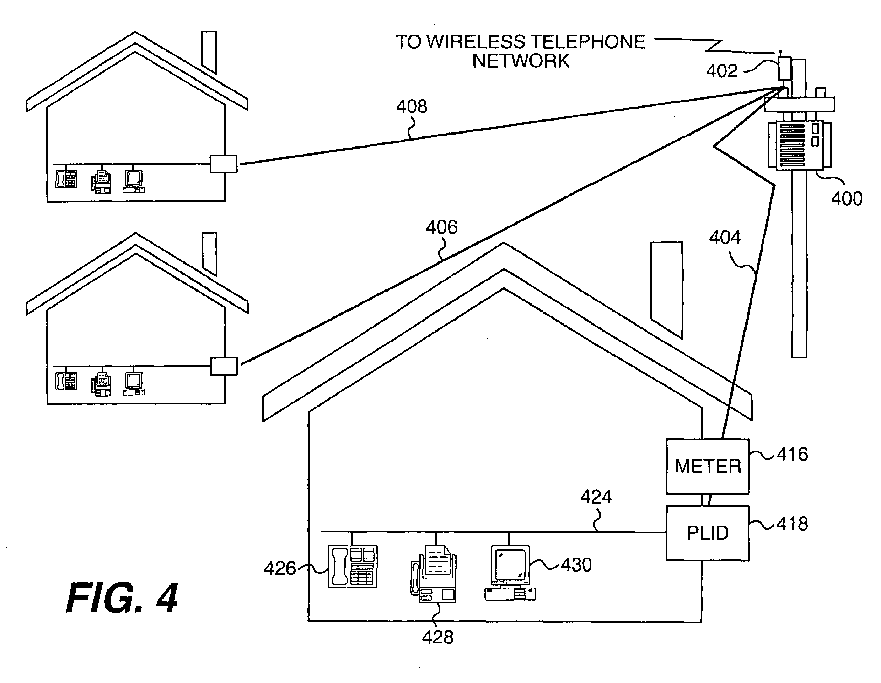

Referring to **Figure 4** an installation for use of FWT's for homes/businesses having telecommunications wiring is shown. The present invention works equally well and economically for those homes/businesses which do have internal telecommunications wiring. In this case telecommunications equipment **426, 428, 430** are connected to internal communications wiring **424.** The internal communications wiring **424** is in turn connected to a PLID **418** which is connected to the power meter **416.** The power meter is the standard power meter that measured power utilization at a home or an installation.

Telecommunication signals are sent via the PLID over power lines **404, 406, 408** to an FWT **402** at the same location as the power company transformer **400.** The power company step-down power transformer **400** provides isolation of signals such that telecommunication signals stay within the transformer cluster. The FWT then multiplexes telecommunication signals and transmits those in wireless fashion to other wireless communications capabilities.

The above topology allows the reuse of the same address within a transformer cluster as is used in other transformer clusters. Since isolation is provided by the step-down power transformer there is no danger of the same address causing confusion as to the identity of the actual subscriber.

The FWT comprises a transceiver such as the Dynaloop family of transceivers from Dynamic Telecommunications, Inc. of Germantown, Maryland and a power network interface module such as the AN 1000 from Adaptive Networks, Inc. of Cambridge, Massachusetts. The transceiver interfaces between the wireless network and the power network. Subsequent wireless communication can be either with a base station or with another FWT as in a peer to peer communications network, or any other wireless network scheme.

Each PLID has a power network interface and a subscriber equipment interface. The power network interface is the same type as is used in the FWT.

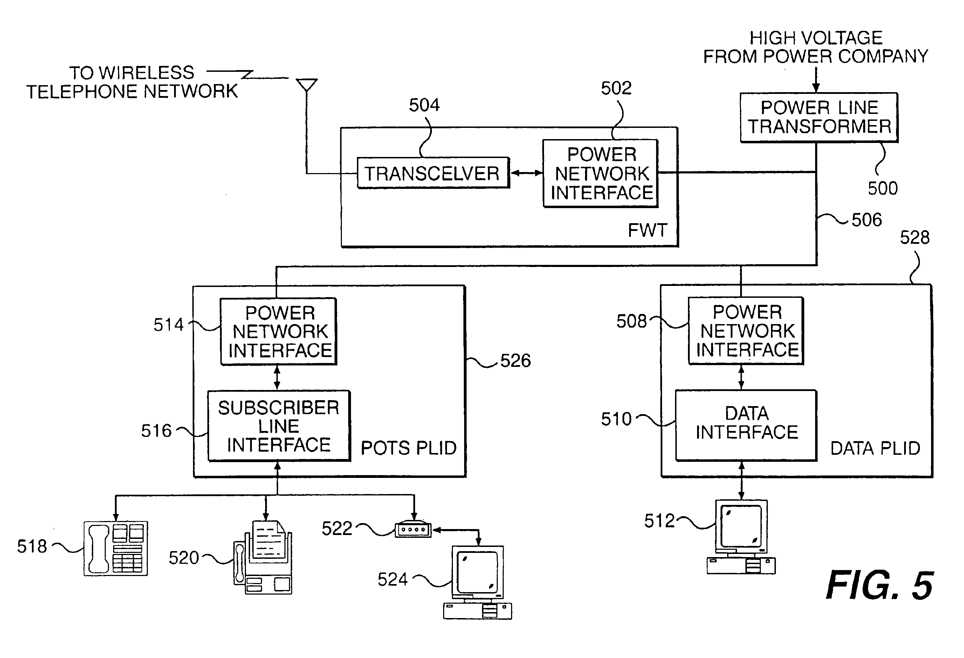

Referring to **Figure 5** a general block diagram of the system is shown. As noted earlier the power line transformer **500** receives high voltage from the power company and provides isolation for communications signals coming from a transformer cluster. This allows for re-use of the same address on power lines between different transformer clusters. The FWT comprises a power network interface **502** and a transceiver **504.** As noted earlier, this transceiver is of the Dynaloop family of transceivers available from Dynamic Telecommunications, Inc. of Germantown, Maryland. The power network interface module such as an AN 1000 from Adaptive Networks, Inc. of Cambridge, Massachusetts is also used. The transceiver **504** interfaces between the wireless network and the power line network. All telecommunication signals exist on the power lines between the power line step-down power transformer and the individuals home/businesses. The power line **506** provides the means of transmitting telecommunication signals from homes or businesses to the transceiver **504.** The FWT is connected to PLID's in the network **526, 528** via the power line **506.** The PLID has a power network interface **508** and a subscriber interface **510** (in this case a data interface is shown). The PLID is thereafter connected to a computer **512.** Alternatively in a telephone installation, the power network interface **514** is connected to a subscriber line interface **516** (in this case a telephone PLID is shown). Connected to the POTS PLID is a telephone **518,** a fax **520,** a modem **522** which in turn is connected to a computer **524.** Individual pieces of equipment or groups of equipment can be connected in the manner shown.

A significant additional advantage to this system is the fact that the FWT has a connection to the power company's power meter. In this fashion individual FWT's can receive information directly from the power meter at individual homes or businesses and communicate that power utilization information in a wireless fashion to the power company. Thus not only does the present invention provide for inexpensive means for telecommunication but also provides an additional advantage to the power company to send utilization information to it without the need for sending trucks and meter readers to record the required power utilization information.

A flexible inexpensive wireless communications network using power tines has been shown. Other specific pieces of equipment may be used to accomplish the same communications goals and objectives of the present invention without departing from the invention as disclosed.

## Claims

1. A fixed wireless terminal (308) for use with an electrical power distribution system, the electrical power distribution system having external power lines (302, 304, 306, 506) connected to internal power lines (328) of a subscriber facilities (314), the internal power lines (328) being communicatively coupled to a first subscriber device (322, 324, 326, 512) via a power line interface device (316, 318, 528), the fixed wireless terminal (308) comprising:
a power network interface (502) communicatively coupled to the external power lines (506) to receive a first data from the first subscriber device (512); and
a wireless transceive (504) communicatively coupled to said power network interface (502) to receive said first data received by said power network interface (502) and wherein said wireless transceiver (504) is configured to wirelessly transmit said first data.

2. The fixed wireless terminal of claim 1, wherein:
said wireless transceiver (504) is configured to wirelessly receive a second data; and
said power network interface (502) is configured to receive said second data received by said wireless transceiver (504) and to transmit said second data through the external power lines (506) for reception by the first subscriber device (512).

3. The fixed wireless terminal of claim 2, wherein said first data and said second data are comprised of voice data.

4. The fixed wireless terminal of claim 3, wherein the first subscriber device (512) is comprised of a telephone.

5. The fixed wireless terminal of claim 3, wherein said first data and said second data are transmitted through the external power lines (506) using a Transmission Control Protocol/Internet Protocol (TCP/IP) protocol.

6. The fixed wireless terminal of claim 1, wherein:
said power network interface (502) is communicatively coupled to a power meter (320) via the external power lines (506); and wherein
said wireless transceiver (504) is configured to receive power utilization data received by said power network interface (502) and to wirelessly transmit said power utilization data.

7. The fixed wireless terminal of claim 2, wherein said first data and said second data are transmitted through the external power lines (506) using a TCP/IP protocol.

8. The fixed wireless terminal of claim 1, wherein:
said power network interface (502) is communicatively coupled to a second subscriber device (312, 518, 520, 524) via the external power lines (506) to receive a third data from the second subscriber device (518); and
wherein the first (512) and second (518) subscriber devices have different addresses.

9. The fixed wireless terminal of claim 8, wherein data transmitted through the external power lines (506) is substantially isolated within a first transformer cluster by a step-down power transformer (300).

10. The fixed wireless terminal of claim 9, wherein an address of at least one subscriber device (512) in said first transformer cluster may be used in another transformer cluster.

11. The fixed wireless terminal of claim 8, wherein said first data and said third data are received in a TCP/IP protocol.

12. The fixed wireless terminal of claim 11, wherein said first data is comprised of voice data.

13. The fixed wireless terminal of claim 12, wherein the first subscriber device (512) is a telephone.

14. The fixed wireless terminal of claim 8, wherein data from first (512) and second (518) subscriber devices is multiplexed at the fixed wireless terminal (308).

15. The fixed wireless terminal of claim 8, wherein the first subscriber device (512) and the second subscriber device (518) are in different subscriber facilities.

16. The fixed wireless terminal of claim 1, wherein the first subscriber device (512) is a telephone.

17. The fixed wireless terminal of claim 1, wherein said fixed wireless terminal (308) is mounted to a utility pole.

18. A method of providing communications for a first subscriber device (322, 324, 326, 512) communicatively coupled to the internal power lines (328) of a subscriber facilities (314) via a power line interface device (316, 318, 528), the internal power lines (328) being electrically connected to an external power line (306, 506) extending from the subscriber facilities (314), the external power line (306, 506) communicatively coupled to a wireless transceiver (504) via a power network interface (502) the method comprising:
(a) receiving by the wireless transceiver (504) a first data via the external power line (306, 506) originating from the first subscriber device (512);
(b) wirelessly transmitting said received first data;
(c) wirelessly receiving by the wireless transceiver (504) a second data; and
(d) transmitting said received second data to the first subscriber device (512) via the external power line (506).

19. The method of claim 18, wherein the external power line (506) is communicatively coupled to a second subscriber device (312, 518, 520, 524) through the internal power lines of a second subscriber facilities (312), the method further comprising:
(a) receiving by the wireless transceiver (504) a third data via the external power line (504) originating from the second subscriber device (518);
(b) wirelessly transmitting said received third data;
(c) wirelessly receiving by the wireless transceiver (504) a fourth data; and
(d) transmitting said received fourth data to the second subscriber device (518) via the external power line (506).

20. The method of claim 18, wherein said first data and said second data are comprised of voice data.

21. The method of claim 20, wherein the first subscriber device (512) is comprised of a telephone.

22. The method of claim 20, wherein said first data and said second data are transmitted through the external power lines (506) using a TCP/IP protocol.

23. The method of claim 18, further comprising receiving power utilization data via the external power line (506).

24. The method of claim 18, wherein said first data and said second data are transmitted through the external power lines (506) using a TCP/IP protocol.

25. The method of claim 19, wherein the first (512) and second (518) subscriber devices have different addresses.

26. The method of claim 25, wherein data communicated through the external power lines (506) is substantially isolated within a first transformer cluster by a step-down power transformer (300).

27. The method of claim 26, wherein an address of at least one subscriber device (512) in said first transformer cluster may be used in another transformer cluster.

28. The method of claim 25, wherein said first data and said third data are received in a TCP/IP protocol.

29. The method of claim 28, wherein data received from the external power line from first (512) and second (518) subscriber devices is multiplexed.

30. The method of claim 29, wherein the first subscriber device (512) is comprised of a telephone.

## Patentansprüche

1. Feststehendes bzw, ortsfestes bzw. fixiertes drahtloses Terminal (308) zur Verwendung in bzw. mit einem Stromverteilungssystem, wobei das Stromverteilungssystem externe Stromleitungen (302, 304, 306, 506), angeschlossen an interne Stromleitungen (328) von Subscriber- bzw. Teilnehmer- bzw. Abonnenteinrichtung (314) aufweist, wobei die internen Stromleitungen (328) kommunizierend an eine erste Subscriber- bzw. Teilnehmer- bzw. Abonnentvorrichtung (322, 324, 326, 512) über eine Stromleitungs-Interface- bzw. -Schnittstellen-Vorrichtung (316, 318, 528) gekoppelt sind, wobei das feststehende drahtlose Terminal (308) umfasst:
ein Stromnetzwerk-Interface (502), kommunizierend an die externen Stromleitungen (506) gekoppelt, zum Empfang von ersten Daten bzw. eines ersten Wertes aus der ersten Subscribervorrichtung (512), und
einen drahtlosen Transceiver bzw. Sende-Empfangsgerät bzw. Sende- und Empfangsprüfkopf (504), kommunizierend gekoppelt an das Stromnetzwerk-Interface (502), zum Empfang der erste Daten, die durch das Stromnetzwerk-Interface (502) empfangen wurden, und wobei der drahtlose Transceiver (504) zum drahtlosen Übertragen der ersten Daten konfiguriert bzw. ausgelegt ist.

2. Feststehendes drahtloses Terminal nach Anspruch 1, wobei:
der drahtlose Transceiver (504) zum drahtlosen Empfang von zweiten Daten bzw, eines zweiten Wertes konfiguriert ist; und
das Stromnetzwerk-Interface (502) zum Empfang der zweiten Daten, empfangen durch den drahtlosen Transceiver (504) und zur Übertragung der zweiten Daten über die externen Stromleitungen (506) zum Empfang durch die erste Subscribervorrichtung (512) konfiguriert ist.

3. Feststehendes drahtloses Terminal nach Anspruch 2, wobei die ersten Daten und die zweiten Daten Sprachdaten umfassen bzw, beinhalten.

4. Feststehendes drahtloses Terminal nach Anspruch 3, wobei die erste Subscribervorrichtung (512) ein Telefon umfasst bzw. beinhaltet.

5. Feststehendes drahtloses Terminal nach Anspruch 3, wobei die ersten Daten und die zweiten Daten über die externen Stromleitungen (506) unter Verwendung des Transmission-Control-Protocol / Internet-Protocol (TCP / IP)-Protokoll übertragen werden.

6. Feststehendes drahtloses Terminal nach Anspruch 1, wobei:
das Stromnetzwerk-Interface (502) kommunizierend an ein Strommessgerät (320) über die äußeren Stromleitungen (506) gekoppelt ist und
wobei der drahtlose Transceiver (504) zum Empfang von Stromnutzdaten, empfangen von dem ersten Stromnetzwerk-Interface (502), und zum drahtlosen Übertragen der Stromnutzdaten konfiguriert ist.

7. Feststehendes drahtloses Terminal nach Anspruch 2, wobei die ersten Daten und die zweiten Daten über die externen Stromleitungen (506) unter Verwendung des TCP / IP-Protokolls übertragen werden.

8. Feststehendes drahtloses Terminal nach Anspruch 1, wobei:
das Stromnetzwerk-Interface (502) kommunizierend an eine zweite Subscribervorrichtung (312, 518, 520, 524) über die externen Stromleitungen (506) zum Empfang von dritten Daten bzw. eines dritten Wertes von der zweiten Subscribervorrichtung (518) gekoppelt ist; und
wobei die ersten (512) und zweiten (518) Subscribervorrichtungen unterschiedliche Adressen aufweisen.

9. Feststehendes drahtloses Terminal nach Anspruch 8, wobei ein Wert bzw. Daten, übertragen über die äußere Stromleitung (506), im Wesentlichen in einem ersten Umwandler- bzw. Transformator- bzw. Transformercluster durch einen Step-down-Powertransformer bzw. -Energietransformator (300) isoliert ist bzw. sind.

10. Feststehendes drahtloses Terminal nach Anspruch 9, wobei eine Adresse von zumindest einer Subscribervorrichtung (512) in dem ersten Transformercluster in einem weiteren Transformercluster verwendet werden kann.

11. Feststehendes drahtloses Terminal nach Anspruch 8, wobei die ersten Daten und die dritten Daten in einem TCP / IP-Protokoll empfangen werden.

12. Feststehendes drahtloses Terminal nach Anspruch 11, wobei die ersten Daten Sprachdaten umfassen.

13. Feststehendes drahtloses Terminal nach Anspruch 12, wobei die erste Subscribervorrichtung (512) ein Telefon ist.

14. Feststehendes drahtloses Terminal nach Anspruch 8, wobei ein Wert bzw. Daten aus den ersten (512) und zweiten (518) Subscribervorrichtungen an dem feststehenden drahtlosen Terminal (308) vervielfacht bzw. multiplext werden.

15. Feststehendes drahtloses Terminal nach Anspruch 8, wobei die erste Subscribervorrichtung (512) und die zweite Subscribervorrichtung (518) in unterschiedlichen Subscribereinrichtungen bzw. -anlagen sind.

16. Feststehendes drahtloses Terminal nach Anspruch 1, wobei die erste Subscribervorrichtung (512) ein Telefon ist.

17. Feststehendes drahtloses Terminal nach Anspruch 1, wobei das feststehende drahtlose Terminal (308) an einem Versorgungsmast befestigt bzw. daran angeordnet ist.

18. Verfahren zum Bereitstellen von Nachrichtenverbindungen bzw. - kommunikation(en) für eine erste Subscriber- bzw. Teilnehmer- bzw. Abonnentvorrichtung (322, 324, 326, 512), kommunizierend gekoppelt an die internen Stromleitungen (328) einer Subscriber- bzw. Teilnehmer- bzw. Abonnenteinrichtung (314) über eine Stromleitungs-Interface- bzw. -Schnittstellen-Vorrichtung (316, 318, 528), wobei die internen Stromleitungen (328) an eine äußere Stromleitung (306, 506), die sich von den Subscribereinrichtungen (314) erstreckt, elektrisch angeschlossen sind, wobei die äußere Stromleitung (306, 506) kommunizierend an einen drahtlosen Transceiver (504) über ein Stromnetzwerk-Interface (502) gekoppelt ist, wobei das Verfahren umfasst:
(a) Empfangen durch den drahtlosen Transceiver (504) eines ersten Wertes bzw. erster Daten über die äußere Stromleitung (306, 506), die von der ersten Subscribervorrichtung (512) stammen,
(b) drahtloses Übertragen der empfangenen ersten Daten,
(c) drahtloses Empfangen durch den drahtlosen Transceiver (504) eines zweiten Wertes bzw. zweiter Daten und
(d) Übertragen der empfangenen zweiten Daten zu der ersten Subscribervorrichtung (512) über die äußere Stromleitung (506).

19. Verfahren nach Anspruch 18, wobei die äußere Stromleitung (506) kommunizierend an eine zweite Subscribervorrichtung (312, 518, 520, 524) über bzw. durch die internen Stromleitungen einer zweiten Subscribereinrichtung (312) gekoppelt ist, wobei das Verfahren weiterhin umfasst:
(a) Empfangen durch den drahtlosen Transceiver (504) eines dritten Wertes bzw. dritter Daten über die äußere Stromleitung (504), die von der zweiten Subscribervorrichtung (518) stammt,
(b) drahtloses Übertragen der empfangenen dritten Daten,
(c) drahtloses Übertragen durch den drahtlosen Transceiver (504) eines vierten Wertes bzw, vierter Daten und
(d) Übertragen der empfangenen vierten Daten zu der zweiten Subscribervorrichtung (518) über die äußere Stromleitung (506).

20. Verfahren nach Anspruch 18, wobei die ersten Daten und die zweiten Daten Sprachdaten umfassen bzw, beinhalten.

21. Verfahren nach Anspruch 20, wobei die erste Subscribervorrichtung (512) ein Telefon umfasst.

22. Verfahren nach Anspruch 20, wobei die ersten Daten und die zweiten Daten über die äußeren Stromleitungen (506) unter Verwendung eines TCP / IP-Protokolls übertragen werden.

23. Verfahren nach Anspruch 18, das außerdem Empfangen von Stromnutzdaten über die äußere Stromleitung (506) umfasst.

24. Verfahren nach Anspruch 18, wobei die ersten Daten und die zweiten Daten über die äußeren Stromleitungen (506) unter Verwendung eines TCP / IP-Protokolls übertragen werden.

25. Verfahren nach Anspruch 19, wobei die ersten (512) und die zweiten (518) Subscribervorrichtungen unterschiedliche Adressen aufweisen.

26. Verfahren nach Anspruch 25, wobei ein Wert bzw. Daten kommuniziert über die externen Stromleitungen (506) in einen ersten Umwandler- bzw. Transformator bzw. Transformercluster durch einen Stepdown-Powertransformer bzw. - Energietransformator (300) im Wesentlichen isoliert ist bzw. sind.

27. Verfahren nach Anspruch 26, wobei eine Adresse von zumindest einer Subscribervorrichtung (512) in dem ersten Transformercluster in einem anderen Transformercluster verwendet werden kann.

28. Verfahren nach Anspruch 25, wobei die ersten Daten und die dritten Daten in einem TCP /IP-Protokoll empfangen werden.

29. Verfahren nach Anspruch 28, wobei Daten, empfangen von der äußeren Stromleitung, von den ersten (512) und den zweiten (518) Subscribervorrichtungen vervielfacht bzw. multiplext werden.

30. Verfahren nach Anspruch 29, wobei die erste Subscribervorrichtung (512) ein Telefon umfasst.

## Revendications

1. Terminal sans fil fixe (308) destiné à être utilisé avec un système de distribution d'énergie électrique, le système de distribution d'énergie électrique ayant des lignes d'énergie externes (302, 304, 306, 506) reliées aux lignes d'énergie internes (328) d'une installation d'abonné (314), les lignes d'énergie internes (328) étant couplées de façon communicative à un premier dispositif d'abonné (322, 324, 326, 512) par l'intermédiaire d'un dispositif d'interface de ligne d'énergie (316, 318, 528), le terminal sans fil fixe (308) comprenant :
une interface de réseau d'énergie (502) couplée de façon communicative aux lignes d'énergie externes (506) pour recevoir une première donnée du premier dispositif d'abonné (512) ; et
un émetteur-récepteur sans fil (504) couplé de façon communicative à ladite interface de réseau d'énergie (502) pour recevoir ladite première donnée reçue par ladite interface de réseau d'énergie (502) et dans lequel ledit émetteur-récepteur sans fil (504) est configuré pour transmettre sans fil ladite première donnée.

2. Terminal sans fil fixe selon la revendication 1, dans lequel :
ledit émetteur-récepteur sans fil (504) est configuré pour recevoir sans fil une deuxième donnée ; et
ladite interface de réseau d'énergie (502) est configurée pour recevoir ladite deuxième donnée reçue par ledit émetteur-récepteur sans fil (504) et pour transmettre ladite deuxième donnée par l'intermédiaire des lignes d'énergie externes (506) pour la réception par le premier dispositif d'abonné (512).

3. Terminal sans fil fixe selon la revendication 2, dans lequel ladite première donnée et ladite deuxième donnée sont constituées d'une donnée vocale.

4. Terminal sans fil fixe selon la revendication 3, dans lequel le premier dispositif d'abonné (512) est constitué d'un téléphone.

5. Terminal sans fil fixe selon la revendication 3, dans lequel ladite première donnée et ladite deuxième donnée sont transmises par l'intermédiaire de lignes d'énergie externes (506) utilisant un protocole protocole de commande de transmission/protocole Internet (TCP/IP).

6. Terminal sans fil fixe selon la revendication 1, dans lequel :
ladite interface de réseau d'énergie (502) est couplée de façon communicative à un dispositif de mesure d'énergie (320) par l'intermédiaire des lignes d'énergie externes (506) et dans lequel :
l'émetteur-récepteur sans fil (504) est configuré pour recevoir les données d'utilisation d'énergie reçues par ladite interface de réseau d'énergie (502) et pour transmettre sans fil ladite donnée d'utilisation d'énergie.

7. Terminal sans fil fixe selon la revendication 2, dans lequel ladite première donnée et ladite deuxième donnée sont transmises par l'intermédiaire de lignes d'énergie externes (506) utilisant un protocole TCP/IP.

8. Terminal sans fil fixe selon la revendication 1, dans lequel :
ladite interface de réseau d'énergie (502) est couplée de façon communicative à un deuxième dispositif d'abonné (312, 518, 520, 524) par l'intermédiaire des lignes d'énergie externes (506) pour recevoir une troisième donnée à partir du deuxième dispositif d'abonné (518) ; et
dans lequel le premier (512) et le deuxième (518) dispositifs d'abonné ont des adresses différentes.

9. Terminal sans fil fixe selon la revendication 8, dans lequel la donnée transmise par l'intermédiaire des lignes d'énergie externes (506) est essentiellement isolée dans un premier ensemble transformateur par un transformateur d'énergie graduel (300).

10. Terminal sans fil fixe selon la revendication 9, dans lequel une adresse d'au moins un dispositif d'abonné (512) dans ledit premier ensemble transformateur peut être utilisée dans un autre ensemble transformateur.

11. Terminal sans fil fixe selon la revendication 8, dans lequel ladite première donnée et ladite troisième donnée sont reçues dans un protocole TCP/IP.

12. Terminal sans fil fixe selon la revendication 11, dans lequel ladite première donnée est constituée d'une donnée vocale.

13. Terminal sans fil fixe selon la revendication 12, dans lequel le premier dispositif d'abonné (512) est un téléphone.

14. Terminal sans fil fixe selon la revendication 8, dans lequel la donnée à partir du premier (512) et du deuxième (518) dispositifs d'abonné est multiplexée au terminal sans fil fixe (308).

15. Terminal sans fil fixe selon la revendication 8, dans lequel le premier dispositif d'abonné (512) et le deuxième dispositif d'abonné (518) sont dans une installation d'abonné différente.

16. Terminal sans fil fixe selon la revendication 1, dans lequel le premier dispositif d'abonné (512) est un téléphone.

17. Terminal sans fil fixe selon la revendication 1, dans lequel ledit terminal sans fil fixe (308) est monté à un pôle d'utilité.

18. Procédé de fourniture de communications pour un premier dispositif d'abonné (322, 324, 326, 512) couplé de façon communicative aux lignes d'énergie internes (328) d'une installation d'abonné (314) par l'intermédiaire d'un dispositif d'interface de lignes d'énergie (316, 318, 528), les lignes d'énergie internes (328) étant reliées électriquement à une ligne d'énergie externe (306, 506) s'étendant à partir de l'installation d'abonné (314), la ligne d'énergie externe (306, 506) étant couplée de façon communicative à un émetteur-récepteur sans fil (504) par l'intermédiaire d'une interface de réseau d'énergie (502), le procédé comprenant :
(a) la réception par l'émetteur-récepteur sans fil (504) d'une première donnée par l'intermédiaire de la ligne d'énergie externe (306, 506) provenant du premier dispositif d'abonné (512) ;
(b) la transmission sans fil de ladite première donnée reçue ;
(c) la réception sans fil par l'émetteur-récepteur sans fil (504) d'une deuxième donnée ; et
(d) la transmission de ladite deuxième donnée reçue au premier dispositif d'abonné (512) par l'intermédiaire de la ligne d'énergie externe (506).

19. Procédé selon la revendication 18, dans lequel la ligne d'énergie externe (506) est couplée de façon communicative à un deuxième dispositif d'abonné (312, 518, 520, 524) par l'intermédiaire des lignes d'énergie internes d'une deuxième installation d'abonné (312), le procédé comprenant, en outre :
(a) la réception par l'émetteur-récepteur sans fil (504) d'une troisième donnée par l'intermédiaire de la ligne d'énergie externe (504) provenant du deuxième dispositif d'abonné (518) ;
(b) la transmission sans fil de ladite troisième donnée reçue ;
(c) la réception sans fil par l'émetteur-récepteur sans fil (504) d'une quatrième donnée ; et
(d) la transmission de ladite quatrième donnée reçue au deuxième dispositif d'abonné (518) par l'intermédiaire de la ligne d'énergie externe (506).

20. Procédé selon la revendication 18, dans lequel ladite première donnée et ladite deuxième donnée sont constituées d'une donnée vocale.

21. Procédé selon la revendication 20, dans lequel le premier dispositif d'abonné (512) est constitué d'un téléphone.

22. Procédé selon la revendication 20, dans lequel ladite première donnée et ladite deuxième donnée sont transmises par l'intermédiaire de lignes d'énergie externes (506) utilisant un protocole TCP/IP.

23. Procédé selon la revendication 18, comprenant, en outre, la réception d'une donnée d'utilisation d'énergie par l'intermédiaire de la ligne d'énergie externe (506).

24. Procédé selon la revendication 18, dans lequel ladite première donnée et ladite deuxième donnée sont transmises par l'intermédiaire des lignes d'énergie externes (506) en utilisant un protocole TCP/IP.

25. Procédé selon la revendication 19, dans lequel le premier (512) et le deuxième (518) dispositifs d'abonné ont des adresses différentes.

26. Procédé selon la revendication 25, dans lequel la donnée communiquée par l'intermédiaire des lignes d'énergie externes (506) est essentiellement isolée dans un premier ensemble transformateur par un transformateur d'énergie graduel (300).

27. Procédé selon la revendication 26, dans lequel une adresse d'au moins un dispositif d'abonné (512) dans ledit premier ensemble transformateur peut être utilisée dans un autre ensemble transformateur.

28. Procédé selon la revendication 25, dans lequel ladite première donnée et ladite troisième donnée sont reçues dans un protocole TCP/IP.

29. Procédé selon la revendication 28, dans lequel la donnée reçue à partir de la ligne d'énergie externe à partir du premier (512) et du deuxième (518) dispositifs d'abonné est multiplexée.

30. Procédé selon la revendication 29, dans lequel le premier dispositif d'abonné (512) est constitué d'un téléphone.
